# EUROPEAN PATENT SPECIFICATION

(11) **EP 3 708 394 B1**
(45) Date of publication and mention of the grant of the patent: **27.05.2026**
(21) Application number: 19162542.5
(22) Date of filing: 13.03.2019
(51) Int. Cl.: B60H 1/24, B60H 1/34

(54) **VEHICLE COMPRISING AN AIR CONDITIONING SYSTEM HAVING A VENTILATION OPENING DEVICE**
FAHRZEUG MIT EINEM KLIMATISIERUNGSSYSTEM MIT EINER LÜFTUNGSÖFFNUNGSVORRICHTUNG
VÉHICULE COMPORTANT UN SYSTÈME DE CLIMATISATION AVEC UN DISPOSITIF D'OUVERTURE DE VENTILATION

(43) Date of publication of application: 16.09.2020
(73) Proprietor: AUDI AG, 85045 Ingolstadt (DE)
(72) Inventor: HÉLOT, Jacques, 85051 Ingolstadt (DE); BELZ, Karsten, 85051 Ingolstadt (DE)

(56) References cited:
- EP-A2- 1 080 958
- DE-C1- 19 924 493
- GB-A- 2 494 421
- JP-U- H0 292 311
- JP-U- H0 522 115

## Description

The invention is concerned with a vehicle with a vehicle interior with an air conditioning system comprising an air conditioning device, at least one ventilation opening device and at least one connecting tube, wherein the air conditioning device is designed to provide conditioned air for the at least one ventilation opening device. The ventilation opening device is furthermore positioned in the vehicle interior such that it is surrounded by a vehicle interior element. The ventilation opening device comprises an air inlet that is connected with the air conditioning device by the connecting tube and a ventilation opening that is designed to eject conditioned air supplied by the connected air conditioning device.

Especially in winter times, there is a need for a ventilation opening of a vehicle air conditioning system placed close to a windshield of the vehicle which is designed to defog or defrost the windshield if necessary.

DE 202 01 314 U1 discloses a defrost device for a windshield of a vehicle comprising a defrost channel with openings for air inlet. The defrost channel also comprises air outlet openings which are positioned in direction to the windshield. With the help of moveable parts for air guidance, which are placed within the opening for air inlet, mounting tolerances of the defrost channel can be compensated by moving the parts for air guidance.

DE 10 2017 003 289 A1 discloses a system for ventilation of a vehicle interior comprising an airflow channel with at least one air outlet which is connected to the airflow channel. The system also comprises a device to guide air which can be moved between a defrost position and a ventilation position. The system can thus be operated in two different modes.

WO 2014/044977 A1 discloses a defogging device for a motor vehicle. A longitudinal position of a central air outlet of this defogging device is movable between different positions in each of which air ejection is possible. Due to this possible movement of the central air outlet it is possible to adapt to different vehicle models which each show a different profile of a front panel.

DE 199 24 493 C1 discloses a nozzle with an air outlet opening, a stop for optionally opening and closing the outlet opening and an insert accommodating air guidance lamella. The insert, in the form of a longitudinally displaceable, frame-like carriage, can be moved into a housing of the nozzle by a defined displacement to close the outlet opening with the stop.

UK 2494421 A discloses an air delivery apparatus for a motor vehicle dashboard with means for moving an air vent between a retracted position in which the vent lies behind a facia or trim surface and a deployed position in which the vent is exposed for air delivery.

The ventilation opening for a defrost and/or defog function of the air conditioning system of a vehicle is typically positioned at a fixed position and air is ejected through the ventilation opening upon activation of the defrost and/or defog function. However most of the active time of use of a vehicle, this ventilation opening designed to defog or defrost the windshield of the vehicle is not used. The result is that the ventilation opening gathers dust quickly and affects the interior design of the vehicle constantly. Furthermore, when bright sunlight hits a dashboard of the vehicle an interior feature like for example the ventilation opening reflects in the windshield even if it is black and may distract the driver.

It is an object of the present invention to provide a solution for a vehicle with a ventilation opening intended for defogging and/or defrosting of a windshield and/or a side window of the vehicle so that the ventilation opening has negligible impact on a vehicle interior. Another object of the present invention is to provide a solution for such a ventilation opening of said vehicle so that creation of distracting reflections is prevented.

The object is accomplished by the subject matter of the independent claims 1-3.

Advantageous developments with convenient and non-trivial further embodiments of the invention are specified in the appended dependent claims.

The underlying assumption of the invention is that there is no benefit in having a ventilation opening for a vehicle which is always visible for a user of a vehicle even if air ejection through the ventilation opening is inactive at the moment. A solution for this problem is given by a ventilation opening device which is designed to occupy an active and an inactive position.

In accordance with a first aspect of the present invention there is provided a vehicle with a vehicle interior with an air conditioning system. The air conditioning system comprises an air conditioning device, at least one ventilation opening device and at least one connecting tube.

The ventilation opening device comprises an air inlet that is connected with the air conditioning device of the air conditioning system and a ventilation opening that is designed to eject conditioned air. The ventilation opening device further comprises a moving mechanism device. The ventilation opening device is thus designed to be moved by the moving mechanism device between an inactive position and an active position dependent on whether conditioned air ejection through the ventilation opening device is activated or deactivated. In the inactive position the ventilation opening device is not intended for conditioned air ejection. In case the ventilation opening device is positioned in an intended mounting position within the vehicle interior and conditioned air is supplied by the connected air conditioning device and if the ventilation opening device is placed in this inactive position it is impossible to eject air directed towards a windshield and/or a side window of the vehicle in order to defog and/or defrost the windshield and/or the side window of the vehicle. In contrast, the active position is intended for conditioned air ejection. In order to defog and/or defrost the windshield and/or the side window of the vehicle, the ventilation opening device always has to be moved by the moving mechanism device into the active position first.

It is for example possible that the inactive position is a position in which the ventilation opening itself is not visible for a user of the vehicle whereas in the active position the ventilation opening can be at least partially visible for the user. In this case the inactive position allows for a ventilation opening device which can be moved in a position in which the ventilation opening is hidden from view of the user if the ventilation opening device is not needed. Thus the ventilation opening is only in view of the user of the vehicle when the defogging or defrosting mode of the air conditioning system of the vehicle is needed or wanted, i.e., activated. In all other situations the ventilation opening device can be moved to the inactive position in which no conditioned air ejection takes place. The ventilation opening device is thus adaptable to a current need for a defog or defrost mode of the air conditioning system. The advantage of the inventive ventilation opening device is hence its negligible impact on the vehicle interior in which it can be positioned due to possible movement between the inactive and the active position.

The air conditioning device is designed to provide conditioned air for the at least one ventilation opening device. The ventilation opening device is positioned in the vehicle interior such that it is surrounded by a vehicle interior element, for example by a cover element of a panel of the vehicle that contacts a windshield of the vehicle. The ventilation opening device comprises the air inlet that is connected with the air conditioning device by the connecting tube and the ventilation opening that is designed to eject conditioned air supplied by the connected air conditioning device. The ventilation opening device is designed to be moved by the moving mechanism device between the inactive position and the active position dependent on whether conditioned air ejection through the ventilation opening device is activated or deactivated. In the inactive position the ventilation opening device is not intended for conditioned air ejection meaning that when the ventilation opening device is deactivated it is positioned in the inactive position.

In contrast, the active position is intended for conditioned air ejection meaning that when the ventilation opening device is activated it is positioned in the active position.

The inactive position is a retracted position with respect to the surrounding vehicle interior element while the active position is an extended position with respect to the surrounding vehicle interior element. By the moving mechanism device, the ventilation opening device can hence be moved perpendicular to the surface of the surrounding vehicle interior element. In the retracted position the ventilation opening itself is recessed with respect to the surface of the surrounding vehicle interior element and could be for example hidden from view of the user of the vehicle if covered up by an additional part of the ventilation opening device. In the extended position the ventilation opening device is moved out relative to the surrounding vehicle interior element and/or the ventilation opening is at least partially visible for the user.

The ventilation opening device is intended to defog and/or defrost the windshield and/or the side window of the vehicle ejecting conditioned air towards the windshield and/ or the side window of the vehicle, but in order to defog and/or defrost the windshield and/or the side window of the vehicle it has to be put in the active position. Since the function of the ventilation opening device is only given when it is placed in the active position. As long as the ventilation opening device is not activated, it is positioned in the inactive position which is retracted with respect to the surrounding vehicle interior element and in which no ejection of conditioned air towards the windshield and/or the side window of the vehicle is possible. With the moving mechanism device, the ventilation opening device is though easily switchable between the inactive position and the active position by moving the ventilation opening device from the retracted position to the extended position. For example within a short amount of time after manual activation of the defog mode of the air conditioning system by a user of the vehicle, the ventilation opening device is moved from the retracted position to the extended position and then defogging of the windshield and/or the side window of the vehicle takes place. The advantage of the inventive vehicle interior is that it is free of a viewable ventilation opening as long as air ejection through the ventilation opening is deactivated. The ventilation opening has hence negligible impact on the vehicle interior because of its two possible positions. Though, intermediate positions may be possible and also visible.

The ventilation opening device further comprises a shutter element. This shutter element is designed to separate the ventilation opening from the vehicle interior in the retracted position. The shutter element is for example designed as a moveable cover element which can be moved from a first position to a second position while in the second position it completely covers the ventilation opening and hides it from the view of the user of the vehicle. This movement of the shutter element is for example carried out by the moving mechanism device or by a shutter moving mechanism device comprised by the ventilation opening device. In the extended position the ventilation opening is at least partially visible for the user and opened up towards the vehicle interior while in the retracted position it is hidden from view of the user by the shutter element. It is thus possible to guarantee that the ventilation opening device is unable to eject conditioned air in the inactive position, which corresponds to the retracted position, due to the fact that the shutter element separates the ventilation opening from the vehicle interior in this position. By removing the shutter element from the top of the ventilation opening, the ventilation opening device is positioned in the extended position and ejection of conditioned air is then possible. The shutter element enables the ventilation opening device to switch between the active and the inactive position of the ventilation opening device. This change in position is furthermore relatively simply realized due to the fact that only the shutter element has to be moved in order to change position of the ventilation opening device. When the ventilation opening is positioned in the retracted position, the vehicle interior is as well designed with low-maintenance because a closed surface of the surrounding vehicle interior element can be realized if a top side of the shutter element is positioned in flush with the surface of the surrounding vehicle interior element. This reduces maintenance for removal of dust from the ventilation opening as it is covered up whenever it is inactive. Furthermore, when the ventilation opening is covered up no distracting reflections are created on the windshield due to sunlight hitting the ventilation opening which is reflected on the windshield.

The moving mechanism device is designed to move the ventilation opening from the extended position to the retracted position by lowering the ventilation opening relative to a surface of the surrounding vehicle interior element and covering a resulting opening in the surrounding vehicle interior element with the shutter element. In a first step the ventilation opening is moved downwards relative to the surface of the surrounding vehicle interior element. This position which is lowered compared to the surface of the surrounding vehicle interior element corresponds to the retracted position. Once the ventilation opening has been moved downwards as described the hole which remains in the surrounding vehicle interior element due to this movement of the ventilation opening device is closed up by moving the shutter element in a position in which it covers the resultant hole, i.e., the resultant opening in the surrounding vehicle interior element. Due to this placement of the shutter element on top of the ventilation opening, the ventilation opening is well hidden from view of the user as long as it is in the retracted position. In the extended position the ventilation opening can be for example positioned in the plane of the surrounding vehicle interior element in a way that the ventilation opening is flush with the surface of the surrounding vehicle interior element. Alternatively it can be moved up in an extended position in which it is elevated relative to the surrounding vehicle interior element. In the described extended position the ventilation opening is at least partially visible for the user. In contrast, in the retracted position, it is completely hidden from view of the user due to the shutter element which is covering the resultant opening in the surrounding vehicle interior element. By sinking the ventilation opening into the surrounding vehicle interior element, which comprises an opening in which the ventilation opening device can be sunk in, the vehicle interior is designed in a way that a quick and simple switch from the inactive retracted position of the ventilation opening device to the active extended position is possible.

The surrounding vehicle interior element is a cover element of a panel of the vehicle that contacts a windshield. Additionally or alternatively the surrounding vehicle interior element is a cover element of a panel of the vehicle that contacts a side window of the vehicle. The ventilation opening device can thus be moved relative to the cover element of the panel of the windshield and/or the cover element of a panel of one of the side windows of the vehicle. With the described ventilation opening device, defrosting and/or defogging of the windshield and/or the side window of the vehicle is possible. In general, various positions of the ventilation opening device within the vehicle interior are possible, resulting in a versatile vehicle interior design.

The invention can further comprise that the moving mechanism device is designed to move the lowered ventilation opening sideways relative to the resultant opening in the surrounding vehicle interior element. Furthermore, the moving mechanism device is designed to move the shutter element to the previous position of the lowered ventilation opening. It is thus not necessary to move the ventilation opening so far downwards compared to the surface of the surrounding vehicle interior element that the shutter element can be placed on top of the ventilation opening as it is possible to perform a movement of the lowered ventilation opening aside so that the shutter element can be placed at the position at which the ventilation opening was placed before it was laterally moved. The ventilation opening device itself or the surrounding vehicle interior element comprises a cavity in which the ventilation opening can be positioned while it is in the described sideways position. This cavity can lie in the same plane as the shutter element. The moving mechanism device is designed to move the ventilation hole downwards or upwards as well as sidewards to or away from the cavity. The described embodiment enables a space-saving design of the vehicle interior due to a flat formed design of the ventilation opening device compared to the previously described embodiment in which the shutter element is placed on top of the lowered ventilation opening.

In accordance with a second aspect of the present invention there is provided a vehicle with a vehicle interior with an air conditioning system comprising an air conditioning device, at least one ventilation opening device and at least one connecting tube. The ventilation opening device comprises an air inlet that is connected with the air conditioning device of the air conditioning system and a ventilation opening that is designed to eject conditioned air. The ventilation opening device further comprises a moving mechanism device and is designed to be moved by the moving mechanism device between an inactive position unintended for conditioned air ejection and an active position intended for conditioned air ejection dependent on whether conditioned air ejection through the ventilation opening device is activated or deactivated.

The air conditioning device is designed to provide conditioned air for the at least one ventilation opening device; and the ventilation opening device is positioned in the vehicle interior such that it is surrounded by a vehicle interior element and comprises the air inlet that is connected with the air conditioning device by the connecting tube and the ventilation opening that is designed to eject conditioned air supplied by the connected air conditioning device.

The ventilation opening device is designed to be moved by the moving mechanism device between the inactive position which is a retracted position with respect to the surrounding vehicle interior element and the active position which is an extended position with respect to the surrounding vehicle interior element dependent on whether conditioned air ejection through the ventilation opening device is activated or deactivated.

The ventilation opening device is intended to defog and/or defrost a windshield of the vehicle ejecting conditioned air towards the windshield of the vehicle, but in order to defog and/or defrost the windshield it has to be put in the active position. The ventilation opening device further comprises a shutter element designed to separate the ventilation opening from the vehicle interior in the retracted position.

The shutter element is formed as a housing of the ventilation opening device.

The housing has a lateral opening on the side of the housing which is oriented towards the windshield and in which the ventilation opening is placed. This opening is for example placed on one side only of in total six sides of a cube-shaped or cuboid-shaped housing. On the side opposite to the side with the opening, the side of the housing is closed. Also the top side of the housing is closed can lie in a plane of the surface of the surrounding vehicle interior element when the ventilation opening device is placed in the retracted position. The moving mechanism device is designed to move the ventilation opening from the retracted position to the extended position by moving the housing upwards until at least a part of the ventilation opening is positioned above the surface of the surrounding vehicle interior element.

In the extended position the user of the vehicle, who is seated at one of the front seats of the vehicle, can see the closed sides of the housing but not the opening which is oriented towards the windshield and from which conditioned air is ejected towards the windshield. The surrounding vehicle interior element is a cover element of a panel of the vehicle that contacts the windshield. In the extended position the ventilation opening is then moved out relative to the cover element of the panel. In the retracted position the closed top side can lie in the plane of a surface of the cover element so that the ventilation opening is not visible for the user of the vehicle because it is covered by the closed top side of the housing, i.e., the shutter element. The ventilation opening device is thus formed like a drawer. When it is not needed the drawer is slid into the surrounding vehicle interior element and is hence completely hidden from the vehicle interior. When the defroster or defogger is needed, the ventilation opening slides out like a drawer and is moved to the extended position in which at least the closed sides of the housing are viewable by the user of the vehicle. After defrosting or defogging of the windshield, the ventilation opening device is moved back into the surrounding vehicle interior element leaving behind the vehicle interior with no visible ventilation opening of the air conditioning system to defog or defrost the windshield of the vehicle. Therefore no dust catching parts of the ventilation opening device are openly positioned in the vehicle interior resulting in a tidy looking interior as well as an interior with reduced elements in need of frequent thorough clean up due to accumulation of dust around the ventilation opening.

In accordance with a third aspect of the present invention there is provided a vehicle with a vehicle interior with an air conditioning system comprising an air conditioning device, at least one ventilation opening device and at least one connecting tube. The ventilation opening device comprises an air inlet that is connected with the air conditioning device of the air conditioning system and a ventilation opening that is designed to eject conditioned air. The ventilation opening device further comprises a moving mechanism device and is designed to be moved by the moving mechanism device between an inactive position unintended for conditioned air ejection and an active position intended for conditioned air ejection dependent on whether conditioned air ejection through the ventilation opening device is activated or deactivated.

The air conditioning device is designed to provide conditioned air for the at least one ventilation opening device; and the ventilation opening device is positioned in the vehicle interior such that it is surrounded by a vehicle interior element and comprises the air inlet that is connected with the air conditioning device by the connecting tube and the ventilation opening that is designed to eject conditioned air supplied by the connected air conditioning device.

The ventilation opening device is designed to be moved by the moving mechanism device between the inactive position which is a retracted position with respect to the surrounding vehicle interior element and the active position which is an extended position with respect to the surrounding vehicle interior element dependent on whether conditioned air ejection through the ventilation opening device is activated or deactivated.

The ventilation opening device is intended to defog and/or defrost a windshield of the vehicle ejecting conditioned air towards the windshield of the vehicle, but in order to defog and/or defrost the windshield it has to be put in the active position. The ventilation opening device further comprises a shutter element designed to separate the ventilation opening from the vehicle interior in the retracted position.

The surrounding vehicle interior element is a tub-shaped indentation positioned at the root of the windshield. In future vehicles, a transparent display can be positioned between a wall of this tub-shaped indentation and a seat of the user. In such a vehicle, there is a short distance between the windshield, which can be referred to as a front window of the vehicle, and the scoop-like space in the front of the vehicle between the wall of the tub-shaped indentation and the display. Nevertheless, it is occasionally the case that the front window of the described vehicle has to be defrosted and/or defogged, e.g., in winter times. The described vehicle interior offers little room for incorporation of a classical ventilation opening in the scoop-like space. The ventilation opening device is thus placed in the wall of the tub-shaped indentation.

The shutter element itself is formed as a housing of the ventilation opening device wherein the housing has an opening on the top side of the housing which is oriented towards the windshield and in which the ventilation opening is placed. On the side opposite of the side with the opening, the housing can be completely closed. On a side perpendicular to the opening side which is referred to as a lateral side, the housing is also closed. This lateral side lies in the plane of the surface of the tub-shaped indentation in the retracted position. The shutter element is hence formed like a drawer which can be moved relative to the surface of the tub-shaped indentation. The moving mechanism device is designed to move the ventilation opening from the retracted position to the extended position by moving the housing sidewards until at least a part of the ventilation opening is positioned above the surface of the tub-shaped indentation. In the retracted position the housing is completely moved in into a cavity in the tub-shaped indentation so that only the closed lateral side which resembles a drawer front is positioned flush with the surface of the tub-shaped indentation. If the tub-shaped indentation is made out of a special material for example a wood application this wood application in not interrupted by a classical ventilation opening for a defroster and defogger but only comprises a part in which the closed lateral side of the housing is visible. Even if only little space is available within the vehicle interior, it is thus possible to allow for a well-designed ventilation opening within the vehicle by designing it in the described drawer shape and movable between the active and the inactive position.

According to a preferred embodiment of the inventive vehicle, the connecting tube is flexible and designed to maintain the connection between the air conditioning device and the ventilation opening device in the retracted and the extended position of the ventilation opening device and during a movement between the retracted position and the extended position. Due to the flexible connecting tube, it is possible to connect the described ventilation opening device to an ordinary air conditioning device. This means that there is no need for a specially equipped air conditioning device of an air conditioning system in order to allow for incorporation of the described ventilation opening device into a common air conditioning system but only for the described flexible design of the connecting tube. The connecting tube is placed at the air inlet of the ventilation opening device and connected with an air outlet of the air conditioning device. It is thus simply accomplished to integrate the ventilation opening device into an existing or classically designed air conditioning system of a vehicle.

In another preferred embodiment of the inventive vehicle, the vehicle interior comprises a control device for controlling the air conditioning system. The control device is designed to trigger the moving mechanism device to move the ventilation opening from the retracted position to the extended position and activate conditional air ejection through the ventilation opening upon manually and/or automatically activating a defog mode or a defrost mode of the air conditioning system. A user of the vehicle can for example manually activate the defog mode by operating a display equipment in the vehicle interior. Such a display equipment can be constructed as a human machine interface, a touchscreen and/or a touchpad and can be manually operated by the user by pushing a button, a rotary switch or touching an area of the touchscreen or touchpad. After the manual activation, the defog mode is activated by the control device and the moving mechanism is activated as well so that the ventilation opening is moved to the extended position and air is ejected through the ventilation opening in the extended position.

It is alternatively or additionally possible to enable an automatic activation of defog or defrost mode, for example depending on measured vehicle interior humidity or measured outside temperature. Alternatively or additionally to the described activation with help of the display equipment it is also possible to remote control the air conditioning system. For example could the user use an application on a mobile device to operate settings of the air conditioning system which are sent to the control device of the air conditioning system. With this remote operation of the air conditioning system it is thus also possible to activate defog or defrost mode. The movement of the ventilation opening from the retracted position to the extended position takes hence only place if one of the named modes of the air conditioning system, the defog mode or the defrost mode, is actually activated. This guarantees that the ventilation opening is only visible whenever the extended position was asked for by the user of the vehicle or whenever predefined activation conditions were met.

The control device may comprise one or more microprocessors and/or one or more microcontrollers. Further, the control device may comprise program code that is designed to perform a method when executed by the processing unit. The program code may be stored in a data storage of the processing unit. The method comprises the above described movement of the ventilation opening between the two positions dependent on whether defrost or defog mode of the air conditioning system was activated or deactivated.

According to an embodiment which does not belong to the present invention there is provided an air conditioning system for a vehicle. This air conditioning system comprises an air conditioning device, at least one ventilation opening device as it was described above and at least one connecting tube connecting the air conditioning device with the at least one ventilation opening device.

The inventive vehicle is preferably designed as a motor vehicle, in particular as a passenger vehicle or a truck, or as a bus or a motorcycle.

In the following an exemplary implementation of the invention is described.

The figures show:
- Fig. 1: a schematic illustration of a vehicle with an air conditioning system;
- Fig. 2a, b, c: a schematic illustration of a vehicle interior with a ventilation opening device in a retracted and an extended position;
- Fig. 3a, b: a schematic illustration of a vehicle door with a ventilation opening device in a retracted and in an extended position;
- Fig. 4a, b: a schematic illustration of a side view of the vehicle door with the ventilation opening device in the retracted and the extended position;
- Fig. 5a, b: a schematic illustration of a ventilation opening device with a shutter element like a housing in the retracted and the extended position
- Fig. 6: a schematic illustration of a ventilation opening device in a vehicle with a tub-shaped indentation; and
- Fig. 7: a schematic illustration of a ventilation opening moved out of the tub-shaped indentation of a vehicle.

The embodiments explained in the following are preferred embodiment of the invention.

In the figures identical reference signs indicate elements that provide the same function.

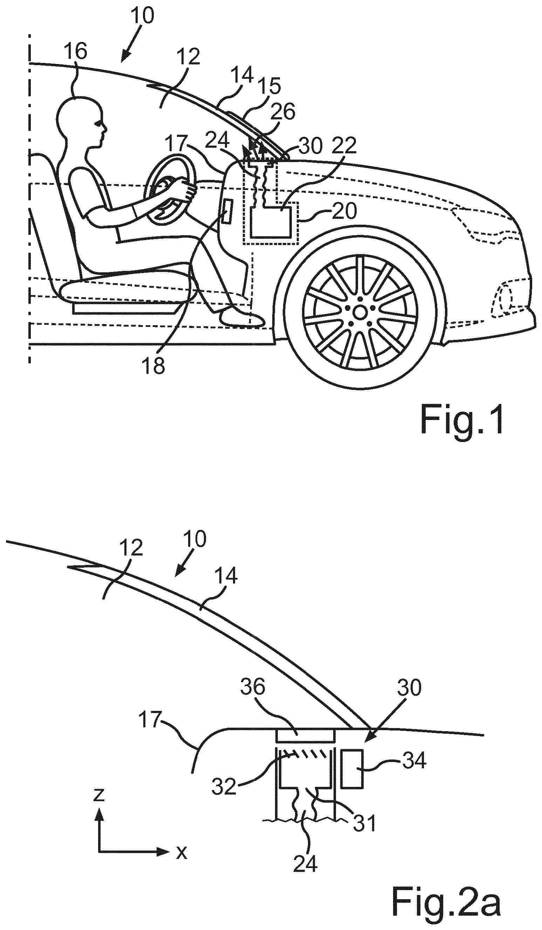

Fig. 1 shows the vehicle 10 with a vehicle interior 12. The vehicle 10 comprises a windshield 14 which is frosted so that ice 15 is on top of a surface of the windshield 14. Inside the vehicle 10 is a user 16 of the vehicle 10. Alternatively or additionally to the ice 15 on the windshield 14, the windshield 14 can be fogged up by a layer of liquid water in an inside of the vehicle 10. Vehicle interior 12 further comprises a cover element of a panel of the vehicle 10 that contacts the windshield 14. This cover element is further referred to as the surrounding vehicle interior element 17.

The vehicle 10 comprises an air conditioning system 20 which comprises an air conditioning device 22, a ventilation opening device 30 and a connecting tube 24. The air conditioning device 22 is designed to provide conditioned air for the ventilation opening device 30. The ventilation opening device 30 is positioned in the vehicle interior 12 such that it is surrounded by the surrounding vehicle interior element 17 and is connected with the air conditioning device 22 via the connecting tube 24. It is furthermore designed to eject conditioned air supplied by the connected air conditioning device 22. This ejected air is sketched in Fig. 1 with arrows 26. To control the air conditioning system 20, the user 16 can manually activate the air conditioning system 20 with a display equipment. The vehicle interior 12 also comprises a control device 18 designed for controlling the air conditioning system 20.

The ventilation opening device 30 is designed to be moved between an inactive position unintended for conditioned air ejection and an active position intended for conditioned air ejection. In Fig. 2a the ventilation opening device 30 is sketched in the inactive position which is a retracted position with respect to the surrounding vehicle interior element 17. In Fig. 2a there is no ice 15 sketched on the windshield 14, thus the ventilation opening device 30 which is intended to defog or defrost a window of a vehicle 12 is not in use.

The ventilation opening device 30 comprises an air inlet 31 that is connected with the air conditioning device 22 by the connecting tube 24 and a ventilation opening 32 that is designed to eject conditioned air supplied by the connected air conditioning device 22 if positioned in the active position intended for conditioned air ejection. The ventilation opening device 30 further comprises a moving mechanism 34 that is designed to be moved by the moving mechanism device 34 between the inactive position which is a retracted position with respect to the surrounding vehicle interior element 17 and the active position which is an extended position with respect to the surrounding vehicle interior element 17. This means that the ventilation opening 32 can be moved upwards or downwards in z-direction if moved by the moving mechanism device 34.

The ventilation opening device 30 comprises additionally a shutter element 36. The shutter element 36 is designed to separate the ventilation opening 32 from the vehicle interior 12 in the retracted position. As sketched in Fig. 2a the shutter element 36 is placed above the ventilation opening 32 in a way that a top side of the shutter element 36 is positioned in flush with the surface of the surrounding vehicle interior element 17.

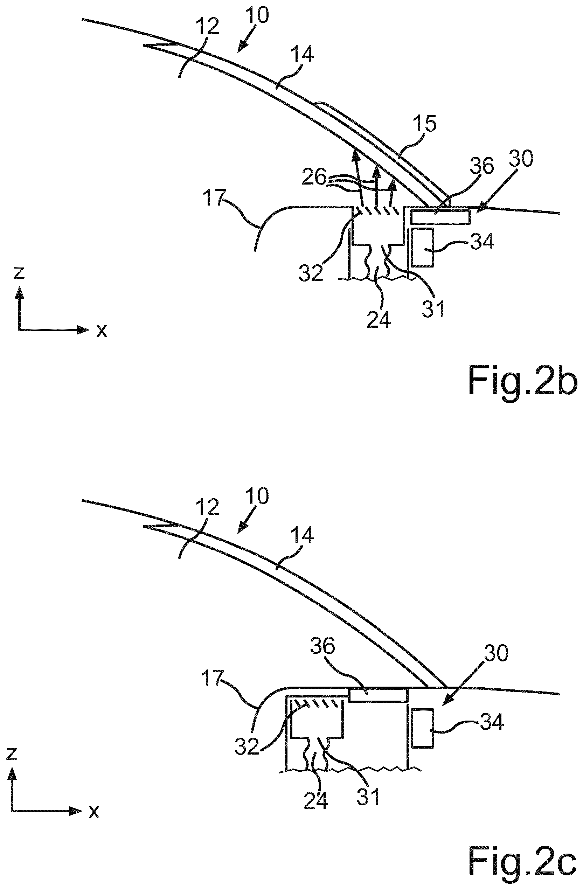

In Fig. 2b, there is ice 15 on the windshield 14 so that the ventilation opening device 30 is activated. In Fig. 2b the ventilation opening device 30 is hence in the extended position which is the position for active air ejection as indicated by the arrows 26. In the extended position, the shutter element 36 is moved sideways in x-direction relative to the position of the ventilation opening 32 and the ventilation opening 32 is moved upwards in z-direction at least to the plane of the surface of the surrounding vehicle interior element 17. In the extended position the ventilation opening 32 is therefore visible for the user 16 and not covered by the shutter element 36.

To move the ventilation opening device 30 from the extended position to the rejected position, the moving mechanism device 34 lowers the ventilation opening 32 relative to the surface of the surrounding vehicle interior element 17 and covers a resultant opening in the surrounding vehicle interior element 17 with the shutter element 36. In the retracted position as shown in Fig. 2a, the ventilation opening 32 is hidden from view of the user 16.

Fig. 2c shows an alternative moving path of the ventilation opening device 30. Here, the lowered ventilation opening 32 is moved sideways relative to the resultant opening in the surrounding vehicle interior element 17 and the shutter element 36 is moved to the previous position of the lowered ventilation opening 32. This means that the ventilation opening 32 is first moved downwards and afterwards laterally shifted by the moving mechanical device 34 in order to allow for the shutter element 36 to cover the resultant opening in the surrounding vehicle interior element 17. Fig. 2c shows the ventilation opening device 30 in the retracted position.

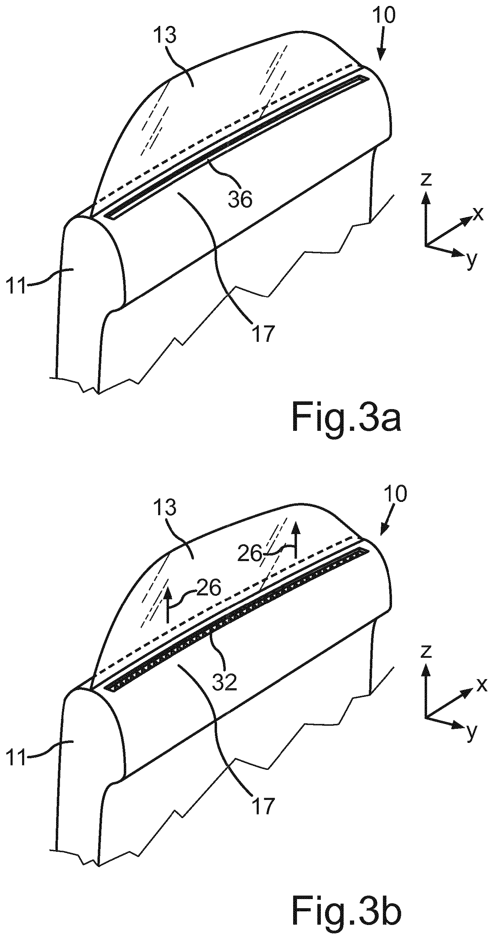

In Fig. 3a and Fig. 3b, the ventilation opening device 30 is integrated into a door 11 of the vehicle 10. It is therefore intended to defog or defrost a side window 13 of the vehicle 10 if positioned in the extracted position. In Fig. 3a the retracted position is sketched. The ventilation opening 32 is therefore covered by the shutter element 36. In Fig. 3b the shutter element 36 is moved sideways so that the ventilation opening 32 is visible for the user 16 of the vehicle 10. In this position air ejection is possible as indicated with the arrows 26.

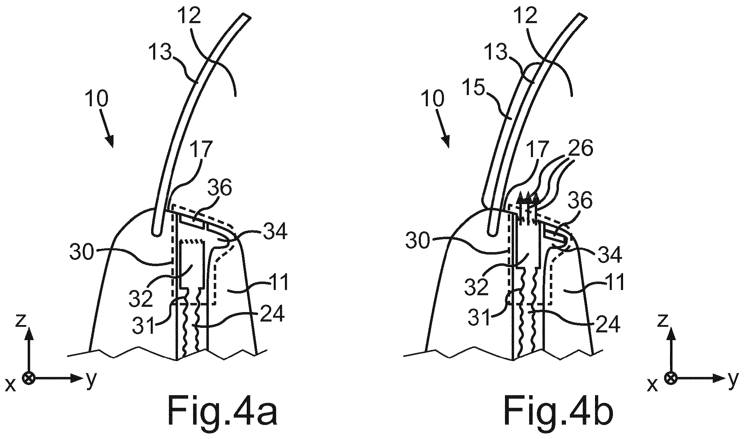

In Fig. 4a and Fig. 4b, this ventilation opening device 30 which can be positioned close to a side window 13 of the vehicle 10 is sketched from another angle as indicated by the coordinate system sketched in the figures. In Fig. 4a the ventilation opening device 30 is sketched in the retracted position in which the shutter element 36 is placed above the ventilation opening 32. In Fig. 4b the shutter element 36 is moved sideways by the moving mechanism device 34 and the ventilation opening 32 is moved upwards to the surface of the surrounding vehicle interior element 17. Now air ejection is possible as indicated with the arrows 26.

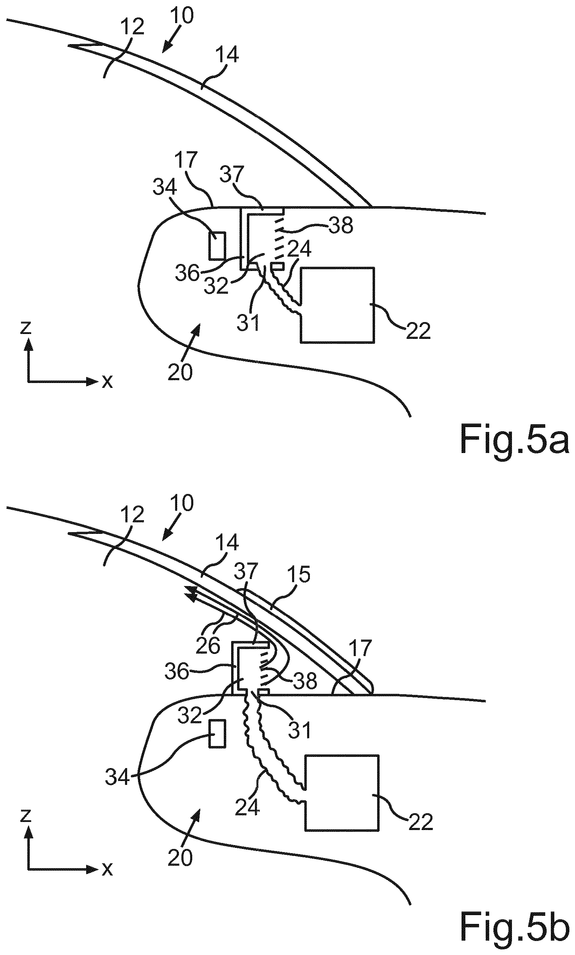

In Fig. 5a and Fig. 5b a ventilation opening device 30 is sketched which comprises a shutter element 36 in the shape of a housing. This housing has a lateral opening 38 on a side of the housing which is oriented towards the windshield 14 and in which the ventilation opening 32 is placed. The moving mechanism device 34 is designed to move the ventilation opening from the rejected position to the extended position by moving the housing upwards until at least a part of the ventilation opening 32 is positioned above the surface of the surrounding vehicle interior element 17. The retracted position is shown in Fig. 5a in which a top side 37 of the shutter element 36 is positioned in flush with the surface of the surrounding vehicle interior element 17.

In Fig. 5b the ventilation opening device 30 is shown in the extended position in which the ventilation opening device 30 has already been moved upwards so that the opening 38 is positioned above the surface of the surrounding vehicle interior element 17. As indicated by arrows 26, air ejection towards the windshield 14 is now possible. However, the user 16 cannot directly see the ventilation opening 32 of the ventilation opening device 30 in the extended position. However as the ventilation opening device 30 is moved outwards relative to the surrounding vehicle interior element 17, the user 16 can see the closed sides of the shutter element 36 which are extended relative to the surrounding vehicle interior element 17.

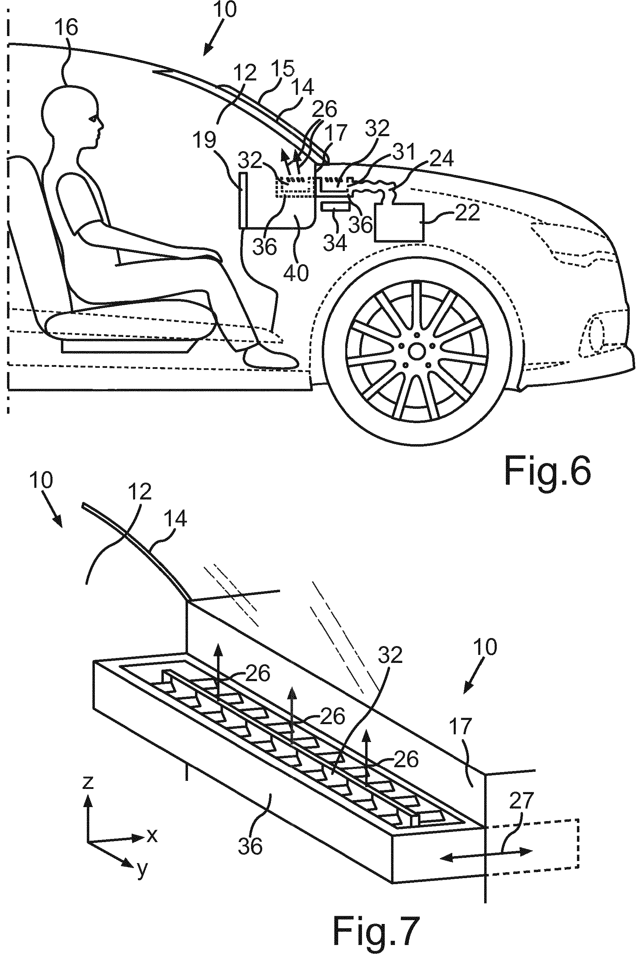

Fig. 6 shows the vehicle 10 with another vehicle interior design. Here the surrounding vehicle interior element 17 is a tub-shaped indentation 40 positioned at the root of the windshield 14. Parallel to the surrounding vehicle interior element 17, a display 19 is positioned which is transparent and can be used by the user 16 to manually activate defrost or defog mode of the air conditioning system 20. This activation can be performed by the user 16 by touch of the display 19 and/or by remote control with a controller and/or speech recognition.

The shutter element 36 is formed as a housing of the ventilation opening device 30. The shutter element 36 has on the top side 37 of the housing the opening 38 which is oriented towards the windshield 14 and in which the ventilation opening 32 is placed. The moving mechanism device 34 is designed to move the ventilation opening 32 from the retracted position to the extended position by moving the shutter element 36 sideways until at least a part of the ventilation opening 32 is positioned above the surface of the tub-shaped indentation 40. In Fig. 6, the retracted position is sketched with drawn lines whereas the extended position is sketched with dashed lines. In the extended position it is once again possible to eject air towards the wind shield 14 as indicated with the arrows 26.

Fig. 7 shows the same ventilation opening device 30 as in Fig. 6 but from another angle. Fig. 7 shows in detail the ventilation opening 32 which is here in the extended position so that air ejection is possible, as indicated with the arrows 26. The shutter element 36 comprises closed lateral sides as well as a closed bottom side so that only the top side 37 with the opening 38 is designed for air ejection. An arrow 27 indicates the possible movement of the ventilation opening 32 to the retracted position. The position of the ventilation opening 32 in the retracted position is sketched with dashed lines in Fig. 7.

The connecting tube 24 is flexible and designed to maintain the connection between the air conditioning device 22 and the ventilation opening device 30 in the retracted and the extended position of the ventilation opening device 30 and during a movement in-between the retracted and the extended position.

The control device 18 is designed for controlling the air conditioning system 20. Upon manual or automatic activation of defog and/or defrost mode of the air conditioning system 20, the control device 18 is designed to trigger the moving mechanism device 34 to move the ventilation opening 32 from the retracted position to the extended position and activate condition air ejection through the ventilation opening 32. The control device 18 can for example be operated upon operation of the display 19 which can be designed as a touchpad.

Overall, the examples show a window defroster which is shaped like a drawer. Future cars may have a vehicle interior 12 which looks more or less like the one sketched in Fig. 6. There is then a very short distance between the front window, which is indicated as the windshield 14, and the scoop-like space in front of the display 19, which is designed as a transparent display. The windshield 14 will still have to be defrosted in winter but there is little room to incorporate a classical defroster, meaning a classical ventilation opening 32, in the slim space between the windshield 14 and the start of the interior architecture. The tub-shaped indentation 40 will most likely be covered by wood and/or another material like for example metal or plastic and cannot be interrupted by the classical ventilation opening 32. This can be solved by having a ventilation opening 32 that is formed like a drawer. When it is not needed it is slid in and the roominess is not disturbed. When the ventilation opening 32 is needed it slides out like a drawer and moves back in after having defrosted and/or defogged the window. Instead of simply having a ventilation opening 32 a ventilation opening device 30 as described above is positioned within the vehicle 10 so that both defrosting but also defogging of the windshield 14 is possible with the ventilation opening device 30. This leads to the advantages that on one hand the windshield 14 can be defrosted and/or defogged while keeping the room in airy interior. On the other hand, the wooden application meaning the tub-shaped indentation 40 is not disturbed by dust catching airvents. The drawer offers additionally the possibility of showing staging and engineering excellence.

## Claims

1. Vehicle (10) with a vehicle interior (12) with an air conditioning system (20) comprising an air conditioning device (22), at least one ventilation opening device (30) and at least one connecting tube (24), wherein the ventilation opening device (30) comprises an air inlet (31) that is connected with the air conditioning device (22) of the air conditioning system (20) and a ventilation opening (32) that is designed to eject conditioned air, wherein the ventilation opening device (30) further comprises a moving mechanism device (34) and is designed to be moved by the moving mechanism device (34) between an inactive position unintended for conditioned air ejection and an active position intended for conditioned air ejection dependent on whether conditioned air ejection through the ventilation opening device (30) is activated or deactivated, wherein
- the air conditioning device (22) is designed to provide conditioned air for the at least one ventilation opening device (30); and
- the ventilation opening device (30) is positioned in the vehicle interior (12) such that it is surrounded by a vehicle interior element (17) and comprises the air inlet (31) that is connected with the air conditioning device (22) by the connecting tube (24) and the ventilation opening (32) that is designed to eject conditioned air supplied by the connected air conditioning device (22);
wherein the ventilation opening device (30) is designed to be moved by the moving mechanism device (34) between the inactive position which is a retracted position with respect to the surrounding vehicle interior element (17) and the active position which is an extended position with respect to the surrounding vehicle interior element (17) dependent on whether conditioned air ejection through the ventilation opening device (30) is activated or deactivated;
wherein the ventilation opening device (30) further comprises a shutter element (36) designed to separate the ventilation opening (32) from the vehicle interior (12) in the retracted position;
wherein the moving mechanism device (34) is designed to move the ventilation opening (32) from the extended position to the retracted position by lowering the ventilation opening (32) relative to a surface of the surrounding vehicle interior element (17) and covering a resultant opening in the surrounding vehicle interior element (17) with the shutter element (36);
and wherein the surrounding vehicle interior element (17) is a cover element or a panel or the venicle (10) that contacts a windshield (14) and/or a side window (13) of the vehicle (10), **characterized in that** the ventilation opening device (30) is intended to defog and/or defrost the windshield (14) and/or the side window (13) of the vehicle (10) ejecting conditioned air towards the windshield (14) and/or the side window (13) of the vehicle (10), but in order to defog and/or defrost the windshield (14) and/or the side window (13) of the vehicle (10) it has to be put in the active position.

2. Vehicle (10) with a vehicle interior (12) with an air conditioning system (20) comprising an air conditioning device (22), at least one ventilation opening device (30) and at least one connecting tube (24), wherein the ventilation opening device (30) comprises an air inlet (31) that is connected with the air conditioning device (22) of the air conditioning system (20) and a ventilation opening (32) that is designed to eject conditioned air, wherein the ventilation opening device (30) further comprises a moving mechanism device (34) and is designed to be moved by the moving mechanism device (34) between an inactive position unintended for conditioned air ejection and an active position intended for conditioned air ejection dependent on whether conditioned air ejection through the ventilation opening device (30) is activated or deactivated, wherein
- the air conditioning device (22) is designed to provide conditioned air for the at least one ventilation opening device (30); and
- the ventilation opening device (30) is positioned in the vehicle interior (12) such that it is surrounded by a vehicle interior element (17) and comprises the air inlet (31) that is connected with the air conditioning device (22) by the connecting tube (24) and the ventilation opening (32) that is designed to eject conditioned air supplied by the connected air conditioning device (22);
wherein the ventilation opening device (30) is designed to be moved by the moving mechanism device (34) between the inactive position which is a retracted position with respect to the surrounding vehicle interior element (17) and the active position which is an extended position with respect to the surrounding vehicle interior element (17) dependent on whether conditioned air ejection through the ventilation opening device (30) is activated or deactivated;
wherein the ventilation opening device (30) further comprises a shutter element (36) designed to separate the ventilation opening (32) from the vehicle interior (12) in the retracted position; and wherein the surrounding vehicle interior element (17) is a cover element of a panel of the vehicle (10) that contacts a windshield (14) of the vehicle (10), **characterized in that** the ventilation opening device (30) is intended to defog and/ or defrost the windshield (14) of the vehicle (10) ejecting conditioned air towards the windshield (14) of the vehicle (10), but in order to defog and/or defrost the windshield (14) of the vehicle (10) it has to be put in the active position,
the shutter element (36) is formed as a housing of the ventilation opening device (30), wherein the housing has a lateral opening (38) on a side of the housing which is oriented towards the windshield (14) of the vehicle (10) and in which the ventilation opening (32) is placed and the moving mechanism device (34) is designed to move the ventilation opening (32) from the retracted position to the extended position by moving the housing upwards until at least a part of the ventilation opening (32) is positioned above the surface of the surrounding vehicle interior element (17).

3. Vehicle (10) with a vehicle interior (12) with an air conditioning system (20) comprising an air conditioning device (22), at least one ventilation opening device (30) and at least one connecting tube (24), wherein the ventilation opening device (30) comprises an air inlet (31) that is connected with the air conditioning device (22) of the air conditioning system (20) and a ventilation opening (32) that is designed to eject conditioned air, wherein the ventilation opening device (30) further comprises a moving mechanism device (34) and is designed to be moved by the moving mechanism device (34) between an inactive position unintended for conditioned air ejection and an active position intended for conditioned air ejection dependent on whether conditioned air ejection through the ventilation opening device (30) is activated or deactivated, wherein
- the air conditioning device (22) is designed to provide conditioned air for the at least one ventilation opening device (30); and
- the ventilation opening device (30) is positioned in the vehicle interior (12) such that it is surrounded by a vehicle interior element (17) and comprises the air inlet (31) that is connected with the air conditioning device (22) by the connecting tube (24) and the ventilation opening (32) that is designed to eject conditioned air supplied by the connected air conditioning device (22);
wherein the ventilation opening device (30) is designed to be moved by the moving mechanism device (34) between the inactive position which is a retracted position with respect to the surrounding vehicle interior element (17) and the active position which is an extended position with respect to the surrounding vehicle interior element (17) dependent on whether conditioned air ejection through the ventilation opening device (30) is activated or deactivated;
and wherein the ventilation opening device (30) further comprises a shutter element (36) designed to separate the ventilation opening (32) from the vehicle interior (12) in the retracted position, **characterized in that** the ventilation opening device (30) is intended to defog and/or defrost a windshield (14) of the vehicle (10) ejecting conditioned air towards the windshield (14) of the vehicle (10), but in order to defog and/or defrost the windshield (14) of the vehicle (10) it has to be put in the active position,
wherein
- the surrounding vehicle interior element (17) is a tub-shaped indentation (40) positioned at the root of the windshield (14);
- the shutter element (36) is formed as a housing of the ventilation opening device (30), wherein the housing has an opening (38) on a top side (37) of the housing which is oriented towards the windshield (14) and in which the ventilation opening (32) is placed; and
- the moving mechanism device (34) is designed to move the ventilation opening (32) from the retracted position to the extended position by moving the housing sideways until at least a part of the ventilation opening (32) is positioned above the surface of the tub-shaped indentation (40).

4. Vehicle (10) according to any of the preceding claims, wherein the connecting tube (24) is flexible and designed to maintain the connection between the air conditioning device (22) and the ventilation opening device (30) in the retracted and the extended position and during a movement in-between the retracted and the extended position.

5. Vehicle (10) according to any of the preceding claims, wherein the vehicle interior (12) comprises a control device (18) for controlling the air conditioning system (20), wherein upon manually and/or automatically activating a defog mode or a defrost mode of the air conditioning system (20) the control device (18) is designed to trigger the moving mechanism device (34) to move the ventilation opening (32) from the retracted position to the extended position and activate conditioned air ejection through the ventilation opening (32).

## Patentansprüche

1. Fahrzeug (10) mit einem Fahrzeuginnenraum (12) mit einem Klimatisierungssystem (20), das eine Klimatisierungsvorrichtung (22), mindestens eine Lüftungsöffnungsvorrichtung (30) und mindestens ein Verbindungsrohr (24) umfasst, wobei die Lüftungsöffnungsvorrichtung (30) einen Lufteinlass (31), der mit der Klimatisierungsvorrichtung (22) des Klimatisierungssystems (20) verbunden ist, und eine Lüftungsöffnung (32) umfasst, die zum Ausstoßen von klimatisierter Luft ausgelegt ist, wobei die Lüftungsöffnungsvorrichtung (30) weiter eine Bewegungsmechanismusvorrichtung (34) umfasst und ausgelegt ist, durch die Bewegungsmechanismusvorrichtung (34) zwischen einer inaktiven Position, die nicht zum Ausstoßen von klimatisierter Luft bestimmt ist, und einer aktiven Position, die zum Ausstoßen von klimatisierter Luft bestimmt ist, bewegt zu werden, in Abhängigkeit davon, ob der Ausstoß von klimatisierter Luft durch die Lüftungsöffnungsvorrichtung (30) aktiviert oder deaktiviert ist, wobei
- die Klimatisierungsvorrichtung (22) ausgelegt ist, um klimatisierte Luft für die mindestens eine Lüftungsöffnungsvorrichtung (30) bereitzustellen; und
- die Lüftungsöffnungsvorrichtung (30) im Fahrzeuginnenraum (12) so angeordnet ist, dass sie von einem Fahrzeuginnenraumelement (17) umgeben ist, und den Lufteinlass (31), der über das Verbindungsrohr (24) mit der Klimatisierungsvorrichtung (22) verbunden ist, und die Lüftungsöffnung (32) umfasst, die ausgelegt ist, um von der verbundenen Klimatisierungsvorrichtung (22) zugeführte klimatisierte Luft auszustoßen;
wobei die Lüftungsöffnungsvorrichtung (30) ausgelegt ist, von der Bewegungsmechanismusvorrichtung (34) zwischen der inaktiven Position, die eine in Bezug auf das umgebende Fahrzeuginnenraumelement (17) zurückgezogene Position ist, und der aktiven Position, die eine in Bezug auf das umgebende Fahrzeuginnenraumelement (17) herausgezogene Position ist, bewegt zu werden, in Abhängigkeit davon, ob der Ausstoß von klimatisierter Luft durch die Lüftungsöffnungsvorrichtung (30) aktiviert oder deaktiviert ist;
wobei die Lüftungsöffnungsvorrichtung (30) weiter ein Verschlusselement (36) umfasst, das ausgelegt ist, um die Lüftungsöffnung (32) in der zurückgezogenen Position vom Fahrzeuginnenraum (12) zu trennen;
wobei die Bewegungsmechanimusvorrichtung (34) ausgelegt ist, um die Lüftungsöffnung (32) aus der herausgezogenen Position in die zurückgezogene Position zu bewegen, indem die Lüftungsöffnung (32) relativ zu einer Oberfläche des umgebenden Fahrzeuginnenraumelements (17) abgesenkt wird und eine dadurch entstehende Öffnung im umgebenden Fahrzeuginnenraumelement (17) mit dem Verschlusselement (36) abgedeckt wird;
und wobei das umgebende Fahrzeuginnenraumelement (17) ein Abdeckelement einer Verkleidung des Fahrzeugs (10) ist, das mit einer Windschutzscheibe (14) und/oder einem Seitenfenster (13) des Fahrzeugs (10) in Kontakt steht, **dadurch gekennzeichnet, dass** die Lüftungsöffnungsvorrichtung (30) bestimmt ist, um die Windschutzscheibe (14) und/oder das Seitenfenster (13) des Fahrzeugs (10) zu entfeuchten und/oder zu enteisen, indem sie klimatisierte Luft in Richtung der Windschutzscheibe (14) und/oder des Seitenfensters (13) des Fahrzeugs (10) ausstößt, wobei sie jedoch zum Entfeuchten und/oder Enteisen der Windschutzscheibe (14) und/oder des Seitenfensters (13) des Fahrzeugs (10) in die aktive Position gebracht werden muss.

2. Fahrzeug (10) mit einem Fahrzeuginnenraum (12) mit einem Klimatisierungssystem (20), das eine Klimatisierungsvorrichtung (22), mindestens eine Lüftungsöffnungsvorrichtung (30) und mindestens ein Verbindungsrohr (24) umfasst, wobei die Lüftungsöffnungsvorrichtung (30) einen Lufteinlass (31), der mit der Klimatisierungsvorrichtung (22) des Klimatisierungssystems (20) verbunden ist, und eine Lüftungsöffnung (32) umfasst, die zum Ausstoßen von klimatisierter Luft ausgelegt ist, wobei die Lüftungsöffnungsvorrichtung (30) weiter eine Bewegungsmechanismusvorrichtung (34) umfasst und ausgelegt ist, durch die Bewegungsmechanismusvorrichtung (34) zwischen einer inaktiven Position, die nicht zum Ausstoßen von klimatisierter Luft bestimmt ist, und einer aktiven Position, die zum Ausstoßen von klimatisierter Luft bestimmt ist, bewegt zu werden, in Abhängigkeit davon, ob der Ausstoß von klimatisierter Luft durch die Lüftungsöffnungsvorrichtung (30) aktiviert oder deaktiviert ist, wobei
- die Klimatisierungsvorrichtung (22) ausgelegt ist, um klimatisierte Luft für die mindestens eine Lüftungsöffnungsvorrichtung (30) bereitzustellen; und
- die Lüftungsöffnungsvorrichtung (30) im Fahrzeuginnenraum (12) so angeordnet ist, dass sie von einem Fahrzeuginnenraumelement (17) umgeben ist, und den Lufteinlass (31), der über das Verbindungsrohr (24) mit der Klimatisierungsvorrichtung (22) verbunden ist, und die Lüftungsöffnung (32) umfasst, die ausgelegt ist, um von der verbundenen Klimatisierungsvorrichtung (22) zugeführte klimatisierte Luft auszustoßen;
wobei die Lüftungsöffnungsvorrichtung (30) ausgelegt ist, von der Bewegungsmechanismusvorrichtung (34) zwischen der inaktiven Position, die eine in Bezug auf das umgebende Fahrzeuginnenraumelement (17) zurückgezogene Position ist, und
der aktiven Position, die eine in Bezug auf das umgebende Fahrzeuginnenraumelement (17) herausgezogene Position ist, bewegt zu werden, in Abhängigkeit davon, ob der Ausstoß von klimatisierter Luft durch die Lüftungsöffnungsvorrichtung (30) aktiviert oder deaktiviert ist;
wobei die Lüftungsöffnungsvorrichtung (30) weiter ein Verschlusselement (36) umfasst, das ausgelegt ist, um die Lüftungsöffnung (32) in der zurückgezogenen Position vom Fahrzeuginnenraum (12) zu trennen; und wobei das umgebende Fahrzeuginnenraumelement (17) ein Abdeckelement einer Verkleidung des Fahrzeugs (10) ist, das mit einer Windschutzscheibe (14) des Fahrzeugs (10) in Kontakt steht, **dadurch gekennzeichnet, dass** die Lüftungsöffnungsvorrichtung (30) bestimmt ist, um die Windschutzscheibe (14) des Fahrzeugs (10) zu entfeuchten und/oder zu enteisen, indem sie klimatisierte Luft in Richtung der Windschutzscheibe (14) des Fahrzeugs (10) ausstößt, wobei es jedoch zum Entfeuchten und/oder Enteisen der Windschutzscheibe (14) des Fahrzeugs (10) in die aktive Position gebracht werden muss, das Verschlusselement (36) als Gehäuse der Lüftungsöffnungsvorrichtung (30) ausgebildet ist, wobei das Gehäuse eine seitliche Öffnung (38) auf einer Seite des Gehäuses aufweist, die zur Windschutzscheibe (14) des Fahrzeugs (10) ausgerichtet ist und in der die Lüftungsöffnung (32) angeordnet ist, und die Bewegungsmechanismusvorrichtung (34) ausgelegt ist, um die Lüftungsöffnung (32) aus der zurückgezogenen Position in die herausgezogene Position zu bewegen, indem das Gehäuse nach oben bewegt wird, bis sich zumindest ein Teil der Lüftungsöffnung (32) über der Oberfläche des umgebenden Fahrzeuginnenraumelements (17) befindet.

3. Fahrzeug (10) mit einem Fahrzeuginnenraum (12) und mit einem Klimatisierungssystem (20), das eine Klimatisierungsvorrichtung (22), mindestens eine Lüftungsöffnungsvorrichtung (30) und mindestens ein Verbindungsrohr (24) umfasst, wobei die Lüftungsöffnungsvorrichtung (30) einen Lufteinlass (31), der mit der Klimatisierungsvorrichtung (22) des Klimatisierungssystems (20) verbunden ist, und eine Lüftungsöffnung (32) umfasst, die zum Ausstoßen von klimatisierter Luft ausgelegt ist, wobei die Lüftungsöffnungsvorrichtung (30) weiter eine Bewegungsmechanismusvorrichtung (34) umfasst und ausgelegt ist, um von der Bewegungsmechanismusvorrichtung (34) zwischen einer inaktiven, nicht für den Ausstoß klimatisierter Luft vorgesehenen Position und einer aktiven, für den Ausstoß klimatisierter Luft vorgesehenen Position bewegt zu werden, in Abhängigkeit davon, ob der Ausstoß klimatisierter Luft durch die Lüftungsöffnungsvorrichtung (30) aktiviert oder deaktiviert ist, wobei
- die Klimatisierungsvorrichtung (22) ausgelegt ist, um klimatisierte Luft für die mindestens eine Lüftungsöffnungsvorrichtung (30) bereitzustellen; und
- die Lüftungsöffnungsvorrichtung (30) im Fahrzeuginnenraum (12) so angeordnet ist, dass sie von einem Fahrzeuginnenraumelement (17) umgeben ist, und den Lufteinlass (31), der über das Verbindungsrohr (24) mit der Klimatisierungsvorrichtung (22) verbunden ist, und die Lüftungsöffnung (32) umfasst, die ausgelegt ist, um von der verbundenen Klimatisierungsvorrichtung (22) zugeführte klimatisierte Luft auszustoßen;
wobei die Lüftungsöffnungsvorrichtung (30) ausgelegt ist, von der Bewegungsmechanismusvorrichtung (34) zwischen der inaktiven Position, die eine in Bezug auf das umgebende Fahrzeuginnenraumelement (17) zurückgezogene Position ist, und der aktiven Position, die eine in Bezug auf das umgebende Fahrzeuginnenraumelement (17) herausgezogene Position ist, bewegt zu werden, in Abhängigkeit davon, ob der Ausstoß von klimatisierter Luft durch die Lüftungsöffnungsvorrichtung (30) aktiviert oder deaktiviert ist;
und wobei die Lüftungsöffnungsvorrichtung (30) weiter ein Verschlusselement (36) umfasst, das ausgelegt ist, um die Lüftungsöffnung (32) in der zurückgezogenen Position vom Fahrzeuginnenraum (12) zu trennen, **dadurch gekennzeichnet, dass** die Lüftungsöffnungsvorrichtung (30) bestimmt ist, um eine Windschutzscheibe (14) des Fahrzeugs (10) zu entfeuchten und/oder zu enteisen, indem sie klimatisierte Luft in Richtung der Windschutzscheibe (14) des Fahrzeugs (10) ausstößt, wobei sie jedoch zum Entfeuchten und/oder Enteisen der Windschutzscheibe (14) des Fahrzeugs (10) in die aktive Position gebracht werden muss,
wobei
- das umgebende Fahrzeuginnenraumelement (17) eine wannenartige Vertiefung (40) ist, die am Ansatz der Windschutzscheibe (14) angeordnet ist;
- das Verschlusselement (36) als Gehäuse der Lüftungsöffnungsvorrichtung (30) ausgebildet ist, wobei das Gehäuse auf einer Oberseite (37) des Gehäuses, die zur Windschutzscheibe (14) hin ausgerichtet ist, eine Öffnung (38) aufweist, in der die Lüftungsöffnung (32) angeordnet ist; und
- die Bewegungsmechanismusvorrichtung (34) ausgelegt ist, um die Lüftungsöffnung (32) aus der zurückgezogenen Position in die herausgezogene Position zu bewegen, indem das Gehäuse seitlich bewegt wird, bis zumindest ein Teil der Lüftungsöffnung (32) über der Oberfläche der wannenförmigen Vertiefung (40) angeordnet ist.

4. Fahrzeug (10) nach einem der vorstehenden Ansprüche, wobei das Verbindungsrohr (24) flexibel ist und ausgelegt ist, um die Verbindung zwischen der Klimatisierungsvorrichtung (22) und der Lüftungsöffnungsvorrichtung (30) sowohl in der zurückgezogenen als auch in der herausgezogenen Position und während einer Bewegung zwischen der zurückgezogenen und der herausgezogenen Position aufrechtzuerhalten.

5. Fahrzeug (10) nach einem der vorstehenden Ansprüche, wobei der Fahrzeuginnenraum (12) ein Steuergerät (18) zur Steuerung des Klimatisierungssystems (20) umfasst, wobei bei manueller und/oder automatischer Aktivierung eines Entfeuchtungsmodus oder eines Enteisungsmodus des Klimatisierungssystems (20) das Steuergerät (18) ausgelegt ist, um die Bewegungsmechanismusvorrichtung (34) auszulösen, um die Lüftungsöffnung (32) aus der zurückgezogenen Position in die herausgezogene Position zu bewegen und den Ausstoß von klimatisierter Luft durch die Lüftungsöffnung (32) zu aktivieren.

## Revendications

1. Véhicule (10) doté d'un habitacle de véhicule (12) équipé d'un système de climatisation (20) comprenant un dispositif de climatisation (22), au moins un dispositif d'ouverture d'aération (30) et au moins un tube de raccordement (24), dans lequel le dispositif d'ouverture d'aération (30) comprend une entrée d'air (31) reliée au dispositif de climatisation (22) du système de climatisation (20) et une ouverture d'aération (32) conçue pour éjecter l'air conditionné, dans lequel le dispositif d'ouverture d'aération (30) comprend en outre un dispositif de mécanisme de déplacement (34) et est conçu pour se déplacer, grâce au dispositif de mécanisme de déplacement (34), entre une position inactive non destinée à une éjection d'air conditionné et une position active destinée à une éjection d'air conditionné, selon que l'éjection d'air conditionné à travers le dispositif d'ouverture d'aération (30) est activée ou non, dans lequel
- le dispositif de climatisation (22) est conçu pour fournir de l'air conditionné à au moins un dispositif d'ouverture de ventilation (30) ; et
- le dispositif d'ouverture de ventilation (30) est positionné dans l'habitacle de véhicule (12) de telle sorte qu'il soit entouré par un élément d'habitacle de véhicule (17) et il comprend l'entrée d'air (31) qui est reliée au dispositif de climatisation (22) par le tube de raccordement (24) et l'ouverture de ventilation (32) conçue pour éjecter l'air conditionné fourni par le dispositif de climatisation connecté (22) ;
dans lequel le dispositif d'ouverture de ventilation (30) est conçu pour être déplacé par le dispositif de mécanisme de déplacement (34) entre la position inactive qui est une position rétractée par rapport à l'élément d'habitacle de véhicule environnant (17) et la position active qui est une position étendue par rapport à l'élément d'habitacle de véhicule environnant (17) selon que l'éjection d'air conditionné à travers le dispositif d'ouverture de ventilation (30) est activée ou désactivée ;
dans lequel le dispositif d'ouverture de ventilation (30) comprend en outre un élément obturateur (36) conçu pour séparer l'ouverture de ventilation (32) de l'habitacle de véhicule (12) en position rétractée ;
dans lequel le dispositif de mécanisme de déplacement (34) est conçu pour déplacer l'ouverture de ventilation (32) de la position étendue à la position rétractée en abaissant l'ouverture de ventilation (32) par rapport à une surface de l'élément d'habitacle du véhicule environnant (17) et en recouvrant une ouverture résultante dans l'élément d'habitacle du véhicule environnant (17) avec l'élément d'obturation (36) ;
et dans lequel l'élément d'habitacle de véhicule environnant (17) est un élément de recouvrement d'un panneau du véhicule (10) qui entre en contact avec un pare-brise (14) et/ou une vitre latérale (13) du véhicule (10), **caractérisé en ce que** le dispositif d'ouverture de ventilation (30) est destiné à désembuer et/ou à dégivrer le pare-brise (14) et/ou la vitre latérale (13) du véhicule (10) en éjectant de l'air conditionné vers le pare-brise (14) et/ou la vitre latérale (13) du véhicule (10), mais il doit être mis en position active afin de désembuer et/ou de dégivrer le pare-brise (14) et/ou la vitre latérale (13) du véhicule (10).

2. Véhicule (10) doté d'un habitacle de véhicule (12) équipé d'un système de climatisation (20) comprenant un dispositif de climatisation (22), au moins un dispositif d'ouverture d'aération (30) et au moins un tube de raccordement (24), dans lequel le dispositif d'ouverture d'aération (30) comprend une entrée d'air (31) reliée au dispositif de climatisation (22) du système de climatisation (20) et une ouverture d'aération (32) conçue pour éjecter l'air conditionné, dans lequel le dispositif d'ouverture d'aération (30) comprend en outre un dispositif de mécanisme de déplacement (34) et est conçu pour se déplacer, grâce au dispositif de mécanisme de déplacement (34), entre une position inactive non destinée à une éjection d'air conditionné et une position active destinée à une éjection d'air conditionné, selon que l'éjection d'air conditionné à travers le dispositif d'ouverture d'aération (30) est activée ou non, dans lequel
- le dispositif de climatisation (22) est conçu pour fournir de l'air conditionné à au moins un dispositif d'ouverture de ventilation (30) ; et
- le dispositif d'ouverture de ventilation (30) est positionné dans l'habitacle de véhicule (12) de telle sorte qu'il soit entouré par un élément d'habitacle de véhicule (17) et il comprend l'entrée d'air (31) qui est reliée au dispositif de climatisation (22) par le tube de raccordement (24) et l'ouverture de ventilation (32) conçue pour éjecter l'air conditionné fourni par le dispositif de climatisation connecté (22) ;
dans lequel le dispositif d'ouverture de ventilation (30) est conçu pour être déplacé par le dispositif de mécanisme mobile (34) entre la position inactive qui est une position rétractée par rapport à l'élément d'habitacle de véhicule environnant (17) et
la position active qui est une position étendue par rapport à l'élément d'habitacle de véhicule environnant (17) en fonction du fait que l'éjection d'air conditionné à travers le dispositif d'ouverture de ventilation (30) soit activée ou désactivée ;
dans lequel le dispositif d'ouverture de ventilation (30) comprend en outre un élément obturateur (36) conçu pour séparer l'ouverture de ventilation (32) de l'habitacle de véhicule (12) en position rétractée ; et dans lequel l'élément d'habitacle de véhicule (17) environnant est un élément de recouvrement d'un panneau du véhicule (10) qui est en contact avec le pare-brise (14) du véhicule (10), **caractérisé en ce que** le dispositif d'ouverture de ventilation (30) est destiné à désembuer et/ou à dégivrer le pare-brise (14) du véhicule (10) en éjectant de l'air conditionné vers le pare-brise (14) du véhicule (10), mais il doit être mis en position active afin de désembuer et/ou de dégivrer le pare-brise (14) du véhicule (10), l'élément d'obturation (36) est formé comme un boîtier du dispositif d'ouverture de ventilation (30), dans lequel le boîtier présente une ouverture latérale (38) sur un côté du boîtier orienté vers le pare-brise (14) du véhicule (10) et dans lequel est placée l'ouverture de ventilation (32) et le dispositif de mécanisme de déplacement (34) est conçu pour déplacer l'ouverture de ventilation (32) de la position rétractée à la position étendue en déplaçant le boîtier vers le haut jusqu'à ce qu'au moins une partie de l'ouverture de ventilation (32) soit positionnée au-dessus de la surface de l'élément d'habitacle de véhicule environnant (17).

3. Véhicule (10) doté d'un habitacle de véhicule (12) équipé d'un système de climatisation (20) comprenant un dispositif de climatisation (22), au moins un dispositif d'ouverture d'aération (30) et au moins un tube de raccordement (24), dans lequel le dispositif d'ouverture d'aération (30) comprend une entrée d'air (31) reliée au dispositif de climatisation (22) du système de climatisation (20) et une ouverture d'aération (32) conçue pour éjecter l'air conditionné, dans lequel le dispositif d'ouverture d'aération (30) comprend en outre un dispositif de mécanisme de déplacement (34) et est conçu pour se déplacer, grâce au dispositif de mécanisme de déplacement (34), entre une position inactive non destinée à une éjection d'air conditionné et une position active destinée à une éjection d'air conditionné, selon que l'éjection d'air conditionné à travers le dispositif d'ouverture d'aération (30) est activée ou non, dans lequel
- le dispositif de climatisation (22) est conçu pour fournir de l'air conditionné à au moins un dispositif d'ouverture de ventilation (30) ; et
- le dispositif d'ouverture de ventilation (30) est positionné dans l'habitacle de véhicule (12) de telle sorte qu'il soit entouré par un élément d'habitacle de véhicule (17) et il comprend l'entrée d'air (31) qui est reliée au dispositif de climatisation (22) par le tube de raccordement (24) et l'ouverture de ventilation (32) conçue pour éjecter l'air conditionné fourni par le dispositif de climatisation connecté (22) ;
dans lequel le dispositif d'ouverture de ventilation (30) est conçu pour être déplacé par le dispositif de mécanisme de déplacement (34) entre la position inactive qui est une position rétractée par rapport à l'élément d'habitacle de véhicule environnant (17) et la position active qui est une position étendue par rapport à l'élément d'habitacle de véhicule environnant (17) selon que l'éjection d'air conditionné à travers le dispositif d'ouverture de ventilation (30) est activée ou désactivée ;
et dans lequel le dispositif d'ouverture de ventilation (30) comprend en outre un élément obturateur (36) conçu pour séparer l'ouverture de ventilation (32) de l'habitacle de véhicule (12) en position rétractée, **caractérisé en ce que** le dispositif d'ouverture de ventilation (30) est destiné à désembuer et/ou à dégivrer le pare-brise (14) du véhicule (10) en éjectant de l'air conditionné vers le pare-brise (14) du véhicule (10), mais il doit être mis en position active afin de désembuer et/ou de dégivrer le pare-brise (14) du véhicule (10),
dans lequel
- l'élément d'habitacle de véhicule environnant (17) est une indentation en forme de cuve (40) positionnée à la base du pare-brise (14) ;
- l'élément d'obturation (36) est formé comme un boîtier du dispositif d'ouverture de ventilation (30), dans lequel le boîtier présente une ouverture (38) sur une face supérieure (37) du boîtier orientée vers le pare-brise (14) et dans laquelle est placée l'ouverture de ventilation (32) ; et
- le dispositif de mécanisme de déplacement (34) est conçu pour déplacer l'ouverture de ventilation (32) de la position rétractée à la position étendue en déplaçant le boîtier latéralement jusqu'à ce qu'au moins une partie de l'ouverture de ventilation (32) soit positionnée au-dessus de la surface de l'indentation en forme de cuve (40).

4. Véhicule (10) selon l'une quelconque des revendications précédentes, dans lequel le tube de raccordement (24) est flexible et conçu pour maintenir la connexion entre le dispositif de climatisation (22) et le dispositif d'ouverture de ventilation (30) en position rétractée et étendue et lors d'un mouvement entre la position rétractée et la position étendue.

5. Véhicule (10) selon l'une quelconque des revendications précédentes, dans lequel l'habitacle de véhicule (12) comprend un dispositif de commande (18) pour commander le système de climatisation (20), dans lequel, lors d'une activation manuelle et/ou automatique d'un mode de désembuage ou d'un mode de dégivrage du système de climatisation (20), le dispositif de commande (18) est conçu pour déclencher le dispositif de mécanisme mobile (34) afin de déplacer l'ouverture de ventilation (32) de la position rétractée à la position étendue et d'activer l'éjection d'air conditionné à travers l'ouverture de ventilation (32).
